(19) Europäisches Patentamt / European Patent Office / Office européen des brevets

(11) **EP 2 020 132 B1**

(12) **EUROPEAN PATENT SPECIFICATION**

(45) Date of publication and mention
of the grant of the patent:
**27.07.2016 Bulletin 2016/30**

(21) Application number: **07748455.8**

(22) Date of filing: **30.04.2007**

(51) Int Cl.:
*H04L 27/26* (2006.01)    *H04L 27/36* (2006.01)
*H04L 5/00* (2006.01)    *H04W 72/12* (2009.01)

(86) International application number:
**PCT/SE2007/050294**

(87) International publication number:
**WO 2007/126385 (08.11.2007 Gazette 2007/45)**

(54) **METHOD AND APPARATUS FOR INTERFERENCE BASED USER EQUIPMENT MANAGEMENT IN A WIRELESS COMMUNICATION NETWORK**

VERFAHREN UND VORRICHTUNG ZUR BENUTZERGERÄTEVERWALTUNG AUF STÖRUNGSBASIS IN EINEM DRAHTLOSEN KOMMUNIKATIONSNETZ

PROCÉDÉ ET APPAREIL POUR GESTION D'ÉQUIPEMENT UTILISATEUR À BASE D'INTERFÉRENCES DANS UN RÉSEAU DE COMMUNICATION RADIO

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **02.05.2006 US 746196 P**

(43) Date of publication of application:
**04.02.2009 Bulletin 2009/06**

(73) Proprietor: **Telefonaktiebolaget LM Ericsson (publ)**
**164 83 Stockholm (SE)**

(72) Inventors:
• **CHENG, Jung-Fu**
  **Cary, NC 27513 (US)**
• **FURUSKÄR, Anders**
  **S-113 44 Stockholm (SE)**
• **HUI, Dennis**
  **Cary, NC 27513 (US)**
• **KAZMI, Muhammad**
  **S-167 39 Bromma (SE)**
• **SIMONSSON, Arne**
  **S-954 33 Gammelstad (SE)**
• **SKILLERMARK, Per**
  **S-112 55 Stockholm (SE)**

(74) Representative: **Ericsson**
**Patent Development**
**Torshamnsgatan 21-23**
**164 80 Stockholm (SE)**

(56) References cited:
**EP-A2- 1 241 779        WO-A1-2005/096533**
**US-A1- 2005 271 012**

• **PAROT R ET AL: "Resolving and correcting gain and phase mismatch in transmitters and receivers for wideband ofdm systems", CONFERENCE RECORD OF THE 36TH. ASILOMAR CONFERENCE ON SIGNALS, SYSTEMS, & COMPUTERS. PACIFIC GROOVE, CA, NOV. 3 - 6, 2002; [ASILOMAR CONFERENCE ON SIGNALS, SYSTEMS AND COMPUTERS], NEW YORK, NY : IEEE, US, vol. 2, 3 November 2002 (2002-11-03), pages 1005-1009, XP010638354, DOI: 10.1109/ACSSC.2002.1196935 ISBN: 978-0-7803-7576-5**
• **VALKAMA M. ET AL.: 'Blind I/Q imbalance compensation in OFDM receivers based on adaptive I/Q signal decorrelation' CIRCUITS AND SYSTEMS, 2005. ISCAS 2005. IEEE INTERNATIONAL SYMPOSIUM vol. 3, 23 May 2005 - 26 May 2005, pages 2611 - 2614, XP010816057**

**Description**

BACKGROUND

Technical Field

The present invention generally relates to serving pluralities of user equipments (UEs), such as cellular radiotelephones, pagers, and other wireless communication devices, and particularly relates to managing UEs, such as in terms of scheduling and power control, according to an interference-based approach.

Background

In the long-term evolution (LTE) of Universal Mobile Telecommunication Systems (UMTS), transmission signals in the downlinks and uplinks are based on orthogonal frequency division multiplexing (OFDM) and single-carrier frequency division multiplex access (SC-FDMA). Under idealized conditions, such uplink transmission signals from different UEs are orthogonal and do not interfere with each other at the network receiver(s), e.g., at the base station receivers.

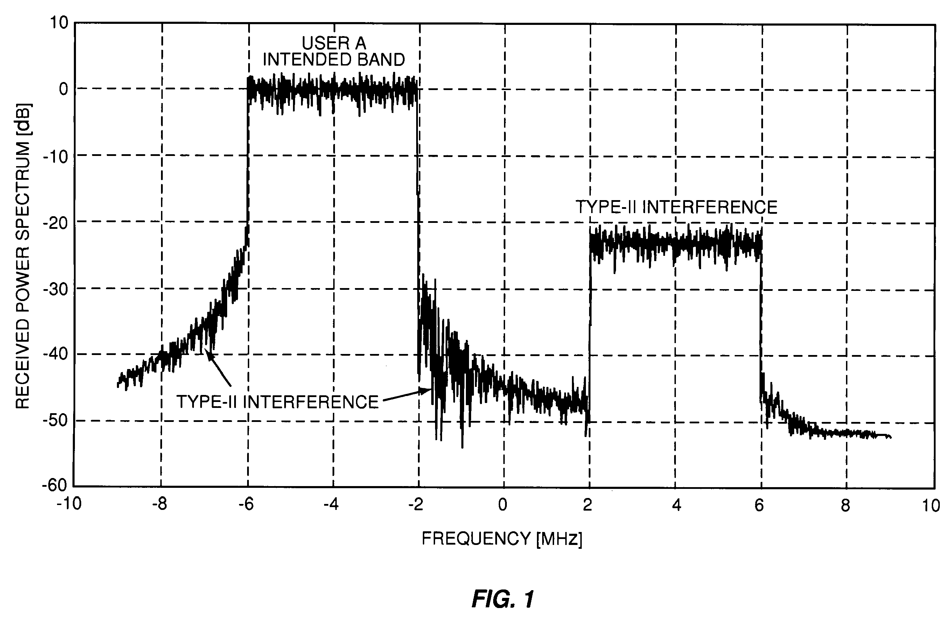

However, due to various imperfections in the transmitter and receiver implementations as well as the time-selectivity of the fading channels, orthogonality cannot be maintained in reality and signals from different UEs leak out of the intended frequency bands and interfere with each other. An example of this problem is shown in Fig. 1. Note that positive frequency bands in the Fig. represent frequencies to the right of the transmission carrier center and negative frequency bands represent frequencies to the left of the transmission carrier center.

Two types of out-of-band interferences can be identified in the example. The first type of interferences, which are generally caused by phase noise, frequency offset and channel time-selectivity, affects adjacent band signals. However, the interference powers generally decay with frequency separation. The second type of interferences, which are generally caused by In-phase and Quadrature (IQ) imbalances, affects signals at the mirror frequency bands.

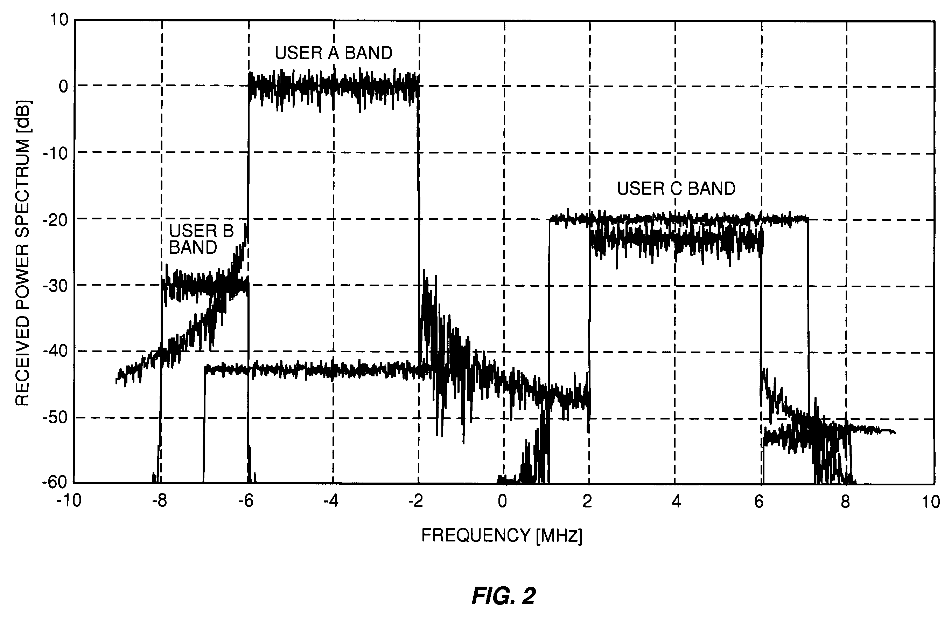

The loss of orthogonality means the signal quality of UEs scheduled in parallel in the frequency domain can be severely degraded. The problems become particularly acute when the received signal strengths, such as may be expressed in a determination of received (signal) power densities, from different UEs differ significantly. Fig. 2 illustrates that circumstance. For instance, the signals as received at the network receiver from user B and user C are 30 dB and 20 dB weaker than that of user A, respectively. The overall carrier power to interference ratio (C/I) for user B is around 0 dB since its signal is affected by Type-I interference from user A. The overall C/I ratio of user C is less than 5 dB since its signal is affected by Type-II interference from user A. Because of the low C/I ratio, neither user B nor C can transmit at high data rates.

For uplink transmissions, the situation depicted in Fig. 2 typically arises when the path gains of different users differ dramatically. Existing solutions to mitigate this near-far problem include, in the context of CDMA-based systems, uplink power control used to equalize received powers of non-orthogonal codes. In at least some wireless local area network (WLAN) contexts, frequency division multiplexing is completely avoided by dedicating the whole frequency band to a single user at any given time. In GSM system contexts, the transmission bandwidth is fixed and, hence, a single analog narrow-band filter can be applied to the transmitted signal to reduce out-of-band interference.

The above approaches reflect a number of limitations and can be problematic in the context of particular system requirements. For example, uplink power control aimed at equalizing received power is useful in systems providing fixed-rate services, such as circuit-switched voice services. For future broadband packet-switched systems, receive power equalization may not be efficient, at least not standing alone, because there generally will not be any fixed SNR target associated with a particular date rate. Instead, the system capacity and UE throughput can be generally optimized if UEs experiencing good channel conditions can transmit at higher power and, hence, higher data rates.

Further, using only time division multiplexing is inefficient in cases when the scheduled UEs do not have enough data to fill the entire bandwidth. The approach is also inefficient when UEs are power limited and, hence, cannot achieve reasonable signal-to-noise ratio (SNR) if allocated the wide frequency spectrum. Additionally, at least in the context of LTE systems, the transmission spectrum as well as the center of the signal band can be dynamically changed. Those dynamic changes make it impractical to design or to include analog filter(s) in the UEs that are capable of performing well over the range of possible transmission spectrums and centers.

In another proposed approach to mitigating inter-cell interference in the context of wireless communication networks that make use of UE scheduling, the R1-050813 ("UL interference control considerations") and R1-060298 ("Uplink inter cell interference mitigation") working group documents promulgated by the 3GPP TSG RAN WG1 suggest a particular frequency allocation scheme. In essence, UEs are assigned to frequency bands based on a signal strength/signal-to-noise-ratio (SNR) ranking. However, the proposed arrangement provides no protection against Type-II interference defined above in the context of OFDM subcarriers.

WO 2005/096533 A1 describes a method and apparatus for communicating in an OFDM system whereby subcarriers of the OFDM system are multiplexed between at least a first and a second transmit antenna. The subcarriers are separated between the at least two transmit antennas so that a subcarrier and a mirror subcarrier are not transmitted on the same transmit antenna and that adjacent subcarriers on the same antenna are at least two subcarrier frequency bandwidths apart.

## SUMMARY

In one or more embodiments taught herein, user equipments (UEs) with similar received signal power densities are scheduled in the same scheduling interval, e.g., they are scheduled to transmit simultaneously within the same transmission time interval (TTI). Such operations are done to the extent allowed by protocols, quality of service (QoS) and other constraints. Conversely, UEs with significantly different received signal power densities are scheduled to transmit in different scheduling intervals. Complementary power control may be jointly included in such scheduling, such as by directly or indirectly controlling the transmit power of UEs individually or in groups to reduce differences in the received signal power densities of the UEs being scheduled.

Thus, in at least one embodiment, a method of scheduling user equipments (UEs) in a wireless communication network comprises determining received signal power densities for a plurality of UEs to be scheduled, and allocating UEs to scheduling intervals based on a sorting of their received signal power densities such that UEs in the same scheduling interval have similar received signal power densities. The method further includes assigning UEs in the same scheduling interval to mirror frequency bands within an available frequency spectrum according to the sorting of their received signal power densities.

With the frequency spectrum defined by a set of Orthogonal Frequency Division Multiplexing (OFDM) subcarriers as an example, sorting the UEs by their received signal power densities places those UEs having the closest matching received signal power densities in adjacent positions within the rank order. As such, the UEs may be taken pair-wise from the sorted order and assigned to OFDM sub-carriers occupying mirror frequency positions. Doing so tends to put UEs having comparable received signal power densities at mirror frequency positions, making them less vulnerable to the Type-2 interference described earlier herein.

In the above example, and in other embodiments and contexts presented herein, the difference between received signal power densities for each pair of UEs being assigned to mirror frequencies can be evaluated against an allowable difference. One or more embodiments presented herein directly or indirectly adjusts the received signal power density of one or both UEs in any pair of UEs where the difference in their received signal power densities exceeds the allowable difference. One adjustment approach involves explicitly controlling the transmit power of one or both such UEs. Additionally, or alternatively, a network entity managing the scheduling, such as a base station, may directly or indirectly signal desired received signal power densities to the UEs scheduled for the same scheduling interval, to reduce such differences and thereby better mitigate intra-cell interference between the UEs.

## BRIEF DESCRIPTION OF THE DRAWINGS

Figs. 1 and 2 are signal diagrams of conventional allocations of user equipments to frequency assignments within a given scheduling interval, and illustrate the interferences associated with such assignments.
Fig. 3 is a block diagram of an embodiment of a communication network having a network entity, such as a base station, that is advantageously configured to reduce interference based on scheduling UEs according to a sorting of their received signal power densities.
Fig. 4 is a logic flow diagram of one embodiment of processing logic implemented by the base station of Fig. 3, for example.
Fig. 5 is a diagram of a set of OFDM subcarriers spanning an available frequency spectrum.
Fig. 6 is a diagram representative of the received signal power densities in rank order for a group of UEs to be scheduled, such as on the OFDM subcarriers of Fig. 5.
Figs. 7 and 8 are signal diagrams serving as examples of UE frequency assignments in two transmission time intervals for an embodiment of scheduling as taught herein.
Fig. 9 is a block diagram for one embodiment of receiver circuits that may be implemented in the base station of Fig. 3, for example, to carry out one or more embodiments of scheduling as taught herein.
Fig. 10 is a logic flow diagram for one embodiment of UE scheduling as taught herein.

## DETAILED DESCRIPTION

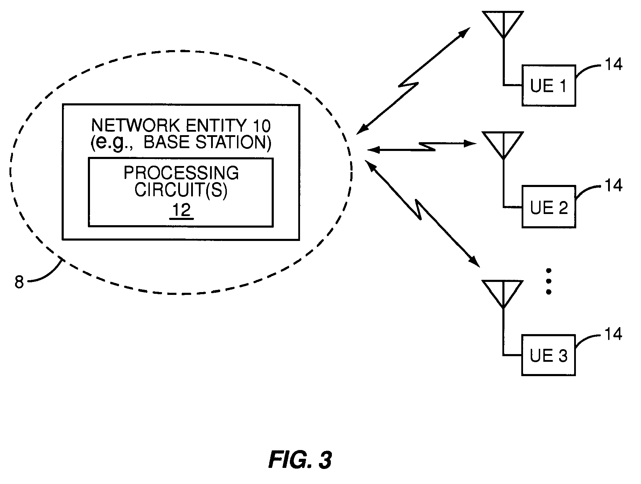

Fig. 3 illustrates a wireless communication network 8, e.g., an WCDMA/LTE network, that includes a network entity 10, e.g., a base station 10, which includes one or more processing circuits 12. The processing circuits 12 are configured to schedule a plurality of user equipments (UEs) 14 (shown as UEs 1..N) in a manner that mitigates intra-cell interference. More particularly, the processing circuits 12 schedule the UEs 14 based on their received signal power densities, which may be expressed as,

$$D_u = \frac{g_u P_{\max u}}{W_u}$$    Eq. (1)

where $D_u$ is the maximum achievable received signal power density for the $u$-th one of the UEs 14, $g_u$ is the (estimated) path gain for the $u$-th UE 14, $P_{\max u}$ is the known or estimated maximum transmit power of the $u$-th UE 14, and $W_u$ is the signal band with of the $u$-th UE 14, which may be known, estimated, or set by default.

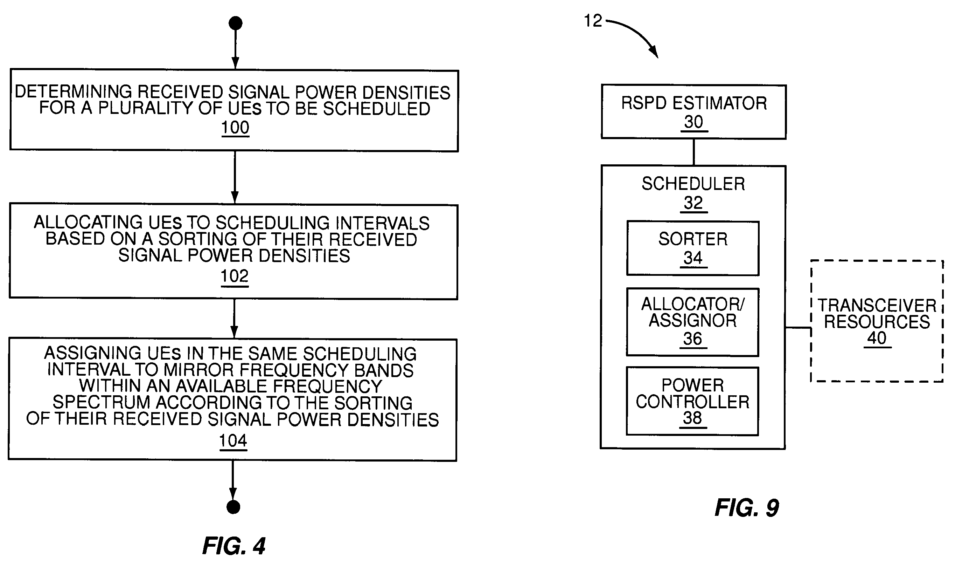

Fig. 4 illustrates a processing method that may be carried out by the processing circuits 12 of the base station 10, according to one embodiment of UE scheduling and/or power control as taught herein. It should be understood that the method is not necessarily limited to the illustrated processing sequence, and some processing steps may be performed together or otherwise in an interrelated fashion. Further, the illustrated processing sequence may be conducted on an ongoing basis, possibly as part of a larger set of communication processing operations carried out at the base station 10.

The illustrated processing begins with determining the received signal power densities for a plurality of UEs 14 to be scheduled (Step 100). For example, the base station 10 may identify all active-state UEs 14 being supported by it. In any case, processing continues with allocating UEs 14 to scheduling intervals-e.g., transmission time intervals (TTIs) in a WCDMA/LTE embodiment-based on a sorting of their received signal power densities (Step 102). Processing continues or otherwise further includes assigning UEs 14 in the same scheduling interval to mirror frequency bands within an available frequency spectrum according to the sorting of their received signal power densities (Step 104).

As an example, this step may comprise assigning pairs of the UEs 14 sorted in rank order of their received signal power densities to consecutive mirror frequency bands within an available frequency spectrum. In turn, assigning these pairs of the UEs 14 comprises, in at least one embodiment, assigning pairs of UEs 14 that are adjacent in the rank order of their received signal power densities to mirror frequency positions in a set of orthogonal frequency division multiplexing (OFDM) sub-carriers.

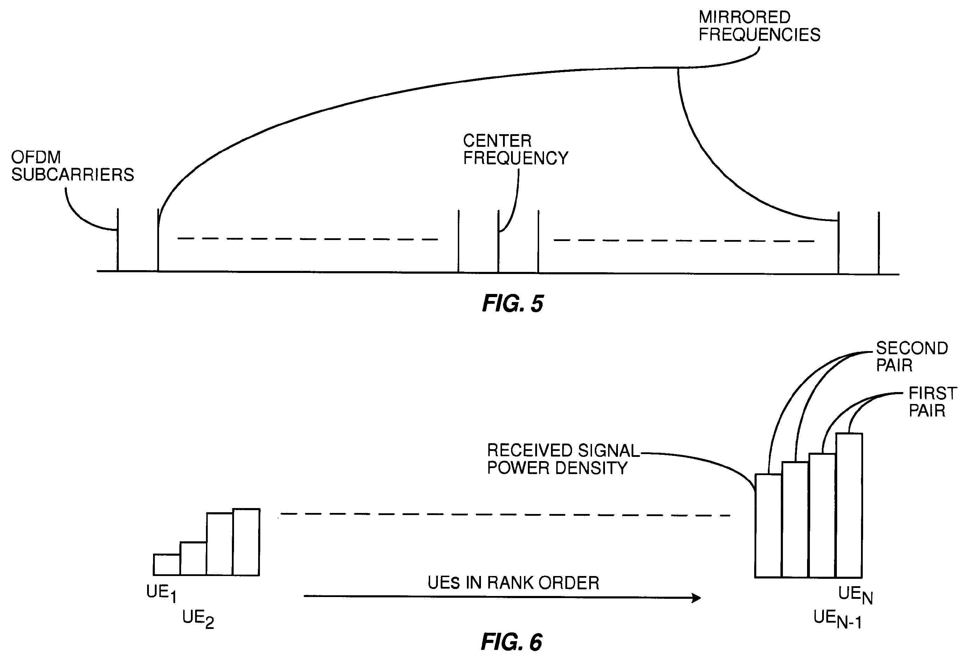

For example, Fig. 5 illustrates a set of OFDM subcarriers spanning a given frequency spectrum, wherein the illustrated set of subcarriers may be considered as including a center frequency having mirrored frequency tones on either side. In this context, Fig. 6 illustrates UEs 1..N, which are sorted in rank order according to their received signal power densities. In one embodiment, assigning pairs of UEs 14 that are adjacent in the rank order of their received signal power densities to mirror frequency positions in a set of OFDM sub-carriers includes assigning a highest ranked pair of UEs (i.e., the rightmost UEs N and N-1 in Fig. 6) to an outermost pair of mirror frequency positions (i.e., the leftmost and corresponding rightmost subcarriers in Fig. 5) and assigning next highest ranked pairs of UEs to consecutive mirror frequency positions moving inward toward a center frequency of the OFDM sub-carriers.

By assigning the highest-ranked pair to the outermost mirror frequencies, at least some portion of their adjacent channel interference falls outside of the frequency spectrum of interest and may therefore be readily filtered. Of course, other assignment orderings may be used, such as assigning in inside-out order, where the strongest pairs are assigned to the middle mirror frequencies.

Regardless of the outside-in or inside-out ordering adopted, it is noteworthy to observe that assigning UEs 14 that are adjacent in rank order of their received signal power densities to mirror frequency pairs tends to minimize the difference between UEs 14 occupying mirror frequency positions in the OFDM spectrum, and thereby reduces the deleterious effects of mirror frequency interference arising between the pair due to IQ imbalances.

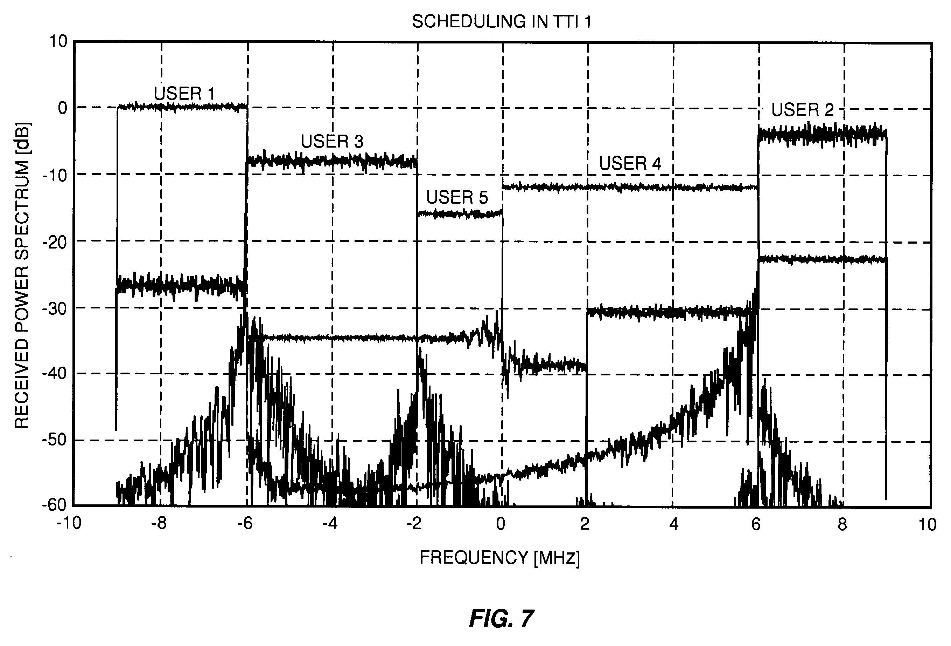

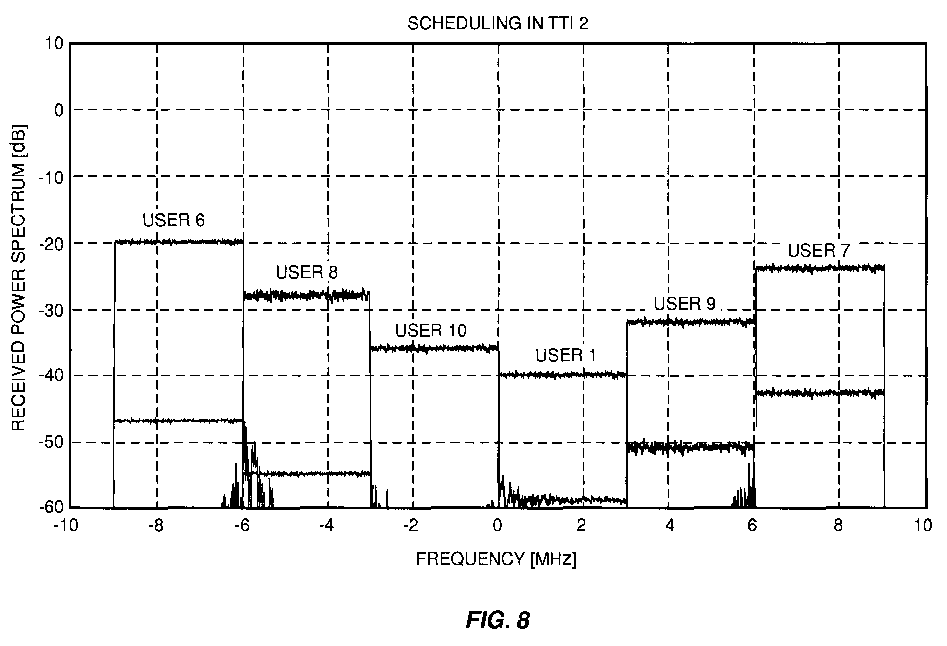

As a non-limiting illustration of the above described sorting and assigning operations, Figs. 7 and 8 and illustrate two scheduling intervals, denoted as TTI 1 and TT2, respectively. Within the context of these illustrations, it should be understood that some plurality of UEs 14 are identified as Users 1..11, and that a first subset of these UEs 14 were assigned to TTI 1 and a second subset were assigned to TTI 2. More particularly, one sees the rank ordering arrangement reflected in the pairwise assignments of User 1/User 2, User 3/User 4, etc., in TTI 1, and User 6/User 7, User 8/User 9, etc., in TTI 2.

Figs. 7 and 8, while not limiting, are also useful for understanding method operations associated with various embodiments of the scheduling method presented herein. As was noted, one or more embodiments of the scheduling method comprise scheduling UEs 14 in a wireless communication network 8, based on determining received signal power densities for a plurality of UEs 14 to be scheduled, allocating the UEs 14 to scheduling intervals based on a sorting of their received signal power densities, and assigning UEs 14 in the same scheduling interval to mirror frequency bands within an available frequency spectrum according to the sorting of their received signal power densities.

Thus, for given UEs 14, assuming there are more UEs 14 than can fit into one scheduling interval, the above method sorts the UEs 14 by their received signal power densities, and uses that sort order to assign a first set (subgroup) of the UEs 14 to a first scheduling interval, with the remaining UEs 14 allocated to one or more subsequent scheduling intervals. Of course, the whole process is dynamic in the context of changing numbers of UEs 14 subject to scheduling, changing reception conditions, QoS considerations, etc.

In one or more variations of the broad method, the method may include signaling a desired received signal power density for UEs 14 in the same scheduling interval. Such embodiments may include determining the desired received signal power density on a scheduling interval basis as a function of the received signal power densities of the UEs allocated to each given scheduling interval. (Thus, a different desired received signal power density may be signaled for different scheduling intervals, reflecting the different values of the received signal power densities estimated for the particular ones of the UEs 14 allocated to each such scheduling interval.)

In one such embodiment, the desired received signal power density for a given scheduling interval is determined as the sum of a defined, allowable difference between received signal power densities for UEs 14 in any given scheduling interval and a minimum received signal power density of those UEs 14 in the given scheduling interval, or as an average of the received signal power densities of those UEs 14 in the given scheduling interval. In such cases, the allowable difference may be defined by default value, or may be determined dynamically.

In any case, in at least one embodiment, signaling the desired received signal power density for UEs 14 in the same scheduling interval may be done on a conditional basis, based on determining whether a difference between maximum and minimum received signal power densities for the UEs scheduled in a given scheduling interval exceeds an allowable difference. That is, the particular UEs 14 assigned to a given scheduling interval may have a difference (max-min) of received signal power densities that is below the allowable difference, in which case there is no need to signal a desired (target) received signal power density.

Thus, processing in one or more embodiments includes determining whether a difference between maximum and minimum received signal power densities for the UEs 14 scheduled in a given scheduling interval exceeds an allowable difference and, if so, signaling one or more of the UEs 14 to adjust one or more of their transmission parameters bearing on their received signal power densities. Such transmission parameters can include transmit powers and/or signal bandwidths. (Signal bandwidth adjustments for a given UE 14 can be used to alter received signal power density. For example, density is lowered for a given transmit power level and path gain by expanding the signal bandwidth, and raised by decreasing the signal bandwidth.)

Also, it should be noted that for one or more embodiments, allocating UEs 14 to scheduling intervals based on a sorting of their received signal power densities comprises sorting UEs 14 by their received signal power densities and allocating UEs 14 from consecutive sorted positions to the scheduling interval until the scheduling interval is fully allocated. At least one embodiment includes ranking the UEs 14 to be scheduled according to their received signal power densities and, for a given scheduling interval, allocating UEs 14 based on their rank order to the given scheduling interval until the given scheduling interval is fully allocated.

Additional options and variations may be used for the mirror frequency assignments. For example, as described earlier, in one or more embodiments, assigning UEs 14 in the same scheduling interval to mirror frequency bands within an available frequency spectrum according to the sorting of their received signal power densities comprises assigning pairs of the UEs 14 sorted in rank order of their received signal power densities to consecutive mirror frequency bands within an available frequency spectrum. Such operations may comprise assigning pairs of UEs 14 that are adjacent in the rank order of their received signal power densities to mirror frequency positions in a set of orthogonal frequency division multiplexing (OFDM) sub-carriers. For that, the method may include assigning a highest ranked pair of UEs 14 to an outermost pair of mirror frequency positions and assigning next highest ranked pairs of UEs 14 to consecutive mirror frequency positions moving inward toward a center frequency of the OFDM sub-carriers:

Turning to example implementation details for the above method operations, Fig. 9 illustrates functional circuit elements for one embodiment of the processing circuits 12. It should be understood that the processing circuits 12 may comprise hardware, software, or any combination thereof. In at least one embodiment, the processing circuits 12 include one or more general or special purpose microprocessors and/or digital signal processors that are programmed to carry out operations corresponding to the above-described method steps. Such instructions may be embodied as one or more computer programs comprising stored program instructions in a storage element (e.g., memory).

In any case, at least one embodiment of the processing circuits 12 comprises a received signal power density estimator 30 (illustrated as "RSPD" estimator). The received signal power density estimator 30 may receive calculation information from other elements within the BS 10, such as estimated, known, or default values to use for the calculation of the received signal power densities. For example, the base station 10 generally includes channel estimation circuits (not shown), which may provide values related to the path gain variables $g_u$.

Continuing, the processing circuits 12 further include a scheduler 32, which may include (or is associated with) a sorter 34 and an allocator/assigner 36, and which may further include a power controller 38. The sorter 34 sorts the UEs 14 to be scheduled in rank order of their received signal power densities as estimated by the RSPD estimator 30, and the allocator/assigner 36 allocates UEs 14 to respective scheduling intervals based on the sorted order, as described above. Also, as described above, the power controller 38 may initiate or otherwise cause power signaling from the base station 10 to one or more of the UEs 14, to reduce differences between the received signal power densities of UEs 14 in the same scheduling interval, e.g., between pairs of UEs 14 that are pairwise assigned to mirror frequencies in a set of OFDM tones.

While not necessarily considered part of the processing circuits 12, it will be understood that the base station 10 includes transceiver resources 40 for wirelessly communicating with the UEs 14 on uplink and downlink communication channels. The base station 10 may include other elements, such as backhaul/sidehaul interfaces, etc., which are not illustrated and which are not germane to this discussion.

With all of the above in mind, it will be appreciated that the scheduling (and power control) methods described herein provide a number of advantages and features. As a non-limiting example, one such advantage is that individual UEs 14 in favorable situations may get higher bit-rates than with conventional scheduling approaches. In turn, higher bit rates improve system capacity. As a further but non-limiting advantage, the modulation quality (e.g. EVM) of the transmitted and received signals can be maintained at acceptable levels, thereby preventing excessive demodulation losses at the base station 10.

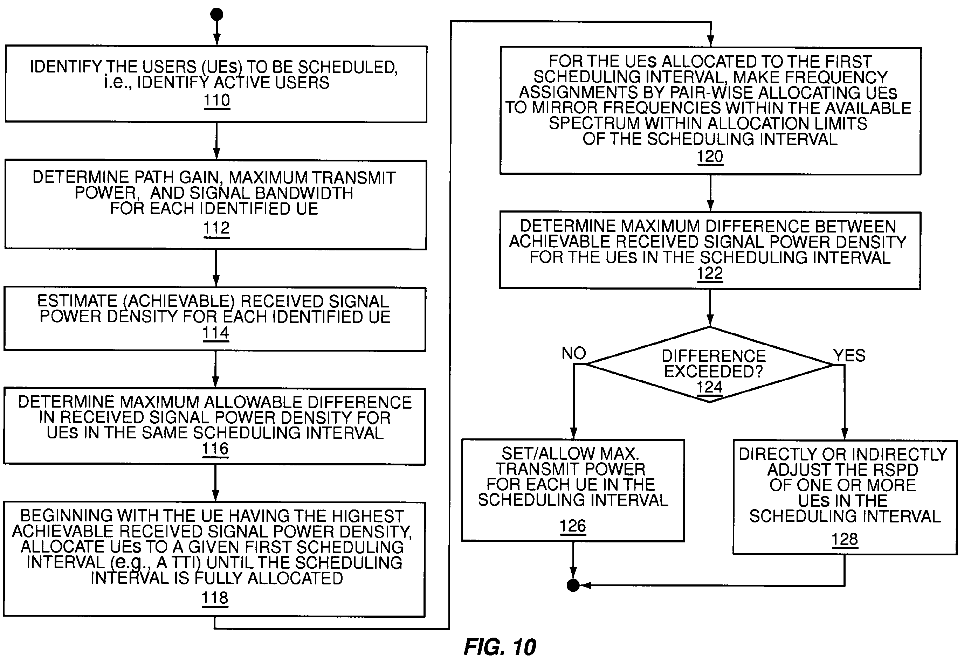

To appreciate these and other advantages, it may be helpful to step through a more detailed example according to Fig. 10, which illustrates one embodiment of the scheduling method presented herein. In the illustrated processing of Fig. 10, a representative scheduling/power control method involves a number of processing steps that are detailed below, and it should be understood that not all such steps are necessarily limited to the illustrated sequence, and some steps may be performed jointly or concurrently.

With that in mind, the processing of Fig. 10 "begins" by first identifying active uplink users (UEs) (Step 110), e.g., u = 1,..., U. The path gain $g_u$, maximum transmit power $P_{\max u}$, and signal bandwidth $W_u$ of each user are determined (Step 112). The maximum achievable received signal power density is then determined-see Eq. (1)-from these values for each of the UEs to be scheduled (Step 114).

Operations continue with determining a maximum difference in received signal power densities, $dD_{\max}$, to be allowed for UEs in the same scheduling interval (Step 116). Then, beginning with the UE with the highest achievable received signal power density, UEs are allocated in a first TTI, until that TTI is fully allocated (Step 118). The allocation capacity assessment may be based on, for example,

$$\sum_{u=1}^{U} W_u \leq W_{sys} \qquad\qquad \text{Eq. (2)}$$

where $W_{sys}$ represents a maximum bandwidth available for each given scheduling interval being allocated.

Continuing, the frequency assignments of users in the same scheduling interval may follow those details presented in the context of Figs. 5 and 6, for example. That is, users are pair-wise allocated to mirror frequencies within the available spectrum until the scheduling interval is fully allocated (Step 120).

Then, the maximum difference between achievable received signal power density for the set of users scheduled for that scheduling interval is determined (Step 122), and whether that difference exceeds the defined maximum allowable difference (Step 124). In other words, it is determined whether the difference between the highest received signal power density and the lowest received signal power density (for the UEs 14 scheduled for that interval) exceeds the maximum allowed difference $dD_{\max}$. If that difference does not exceed $dD_{\max}$, then the transmit power of the users is set to $P_u = P_{\max u}$ (Step 126), i.e., all users in that scheduling interval will be permitted to transmit at their maximum powers.

However, if the difference in maximum achievable received signal power densities between the scheduled users exceeds $dD_{\max}$, then, in order to ensure that the highest received signal power density is not more than $dD_{\max}$ stronger than the weakest received signal power density for the set of UEs in the same scheduling interval, the received signal power densities of one or more of the users is adjusted directly or indirectly (Step 128). For example, the processing circuits 12 may be configured to cause the base station 10 to set the transmit power levels of users with high received signal power densities to values below their maximum, i.e., $P_u < P_{\max u}$. In this context, "high" simply connotes one or more of the UEs 14 within the given scheduling interval being considered that have received signal power densities above those of the remaining UEs 14 scheduled in that interval.

Additionally or alternatively, the processing circuits 12 may be configured to cause the base station 10 to adjust the signal bandwidths of one or more of the scheduled users. For example, one or more users having relatively low received signal power densities may have their signal bandwidths decreased. Conversely, one or more users having relatively higher received signal power densities may have their signal bandwidths increased.

In terms of adjusting the transmit powers of those UEs 14 whose received signal power densities are too high on a relative basis, a variety of signaling approaches and considerations are contemplated herein. For example, the base station 10 may signal an "allowed transmit power," such as by signaling the absolute value of the transmit power to be used, or by signaling an offset relative to the UE's maximum transmit power.

Of course, there may be significant signaling activity in cases where individual (per UE) signaling is used to make UE power adjustments. Alternatively, the receiver circuits 12 may be configured to compute a desired received signal power density (e.g., a target value), such that the base station 10 signals the desired received signal power density at least to the group of UEs 14 to be served in the same scheduling interval. (Note that the desired received signal power density may change from scheduling interval to scheduling interval, because of changes in the received signal power densities (relative or absolute) of the UEs 14 being allocated to the different scheduling intervals.

One approach to calculating a received signal power density as a common value for the group of UEs 14 allocated to a given scheduling interval, the receiver circuits 12 may configured to implement the following rule:

$$D_{\text{target}} = \min\{D_u\} + dD_{max} \qquad \text{Eq. (3)}$$

where $\{D_u\}$ is the set of maximum power spectral densities of users scheduled in the same scheduling interval (e.g., the same TTI). Of course, other rules are possible to estimate the target received power spectral density, such as the average of $\{D_u\}$.

In turns, the individual UEs 14 can estimate the transmit power to be used for achieving the desired received signal power density using formulation of Eq. (1), given as,

$$D_{\text{target}} = P\text{target}\frac{g_u}{W_u} \qquad \text{Eq. (4)}$$

In Eq. (4), each UE 14 can estimate its path gain $g_u$ based on receiving downlink reference symbols, e.g., pilot information. In WCDMA embodiments, Common Pilot Channel (CPICH) power is signalled on the broadcast channel, thereby allowing individual UEs 14 to estimate their path gains for uplink power control. The CPICH RSCP is also reported to the network 8 (base station 10), which uses it for various Radio Resource Management (RRM) functions, such as handovers, etc. Note that each UE's signal bandwidth, $W_u$, may be indicated as part of scheduling grant information.

The above embodiment of signaling the desired received signal power density may be implemented by multicasting of the desired value on a scheduling interval basis, for use by the groups of UEs scheduled in same scheduling interval. Signaling overheads can be further reduced by signaling the desired received signal power density as an offset from some maximum or minimum predefined level.

In another aspect of the teachings herein, consider that at the base station 10, both the received signal power densities and received signal quality (SNR) are known for each of the UEs 14 subject to scheduling. By combining these measures with information about scheduling interval (TTI) frequency usage, whether or not there are multiple concurrent users, and frequency allocation distances, the interference impact can be estimated. The typical measurement entity may refer to a "cell" or other defined coverage area within a cell/sector communication environment.

In any case, based on an assumed interference impact, fixed or adaptive as above, and an expected link performance, the scheduling method(s) presented herein may consider user bitrate (individual or aggregate) as an adaptation objective when considering whether (and by how much) to adjust the received signal power densities of UEs 14. For example, the maximum number of bits received per TTI can be targeted. Alternatively some fairness between UEs 14 can be achieved. Of course, QoS and other constraints also may be included for consideration in the determining of whether and by how much received signal power densities are adjusted for individual or groups of UEs 14.

As a further variation, it may be noted that one or more embodiments of the scheduling method presented herein may be practiced without the base station 10 necessarily having access to all of the information needed to determine the received signal power densities for the UEs 14 subject to scheduling, such as shown in Eq. (1). For example, in the existing UMTS Release 6 (UMTS/R6) and for the current assumptions of the proposed LTE systems, scheduling as taught herein can be applied using incremental controls and commands that are supported by currently available information.

As a non-limiting example, in a UMTS/R6 system, the Rate Request feedback message from a given UE to a base station contains a field that indicates whether the UE can still increase its transmission power from the current level. The base station can periodically instruct the UE to increase or decrease its transmission power by a fixed and pre-agreed amount through the Power Control Command.

Using the illustrated base station 10 and UEs 14 as an example, without restricting such entities to currently available communication standards and configurations, it will be noted that, based on a current observed received signal power density for a given UE 16 at time $N$ (denoted by $D_u(N)$), the scheduling algorithm at the base station 10 can calculate the expected impact on interference levels if it decides to command the UE 16 to increase transmission power by X dB, or to change the amount of assigned frequency band by Y %.

The expected impact can be estimated by first calculating the expected spectrum density at time N+1 using

$$D_u(N+1) = \frac{D_u(N) \cdot 10^{x/10}}{(1+Y/100)} \qquad \text{Eq. (5)}$$

With this expected spectrum density, the scheduling algorithm at the base station 10 can proceed with the method as described above for received signal power densities determined, e.g., from Eq. (1).

As a further extension, the methods presented herein can also be used to carry out combined scheduling and power control in the downlink, where the transmitted power spectral density of the users scheduled during the same interval should be within a certain maximum range ($dD_{max}$). Doing so ensures that a base station transmitter does not cause excessive EVM, which in turn helps guarantee adequate modulation quality of the transmitted signal at the base station. When compared to the uplink case, one may consider that the transmitted power spectral density of all users scheduled during the same scheduling interval should be maintained within an allowed range. Also, for downlink implementations, control signaling regarding adjustments of received signal power densities to one or more UEs 14 is not needed as the base station 10 originates the transmitted signals.

As a further extension, scheduling as taught herein may be carried out on a combined multi-cell (sector) basis. For example neighboring base stations 10 (two or more) may schedule UEs 14 in neighboring sectors as a function of their received signal power densities, to mitigate intra- and inter-cell interference. Such combined scheduling may be done on the uplink and/or downlink.

With these and other variations and extensions in mind, those skilled in the art will appreciate that the foregoing description and the accompanying drawings represent non-limiting examples of the methods and apparatus taught herein for UE scheduling. As such, the present invention is not limited by the foregoing description and accompanying drawings. Instead, the present invention is limited only by the following claims and their legal equivalents.

**Claims**

1. A method of scheduling user equipments, UEs, (14) in an Orthogonal Frequency Division Multiplexing, OFDM, wireless communication network, comprising:

   determining (100) received signal power densities for a plurality of UEs (14) to be scheduled;
   allocating (102) UEs (14) to scheduling intervals based on a sorting of their received signal power densities, wherein allocating UEs (14) to scheduling intervals based on a sorting of their received signal power densities comprises sorting UEs (14) by their received signal power densities and allocating UEs (14) from consecutive sorted positions to the scheduling interval until the scheduling interval is fully allocated; and
   assigning (104) allocated UEs (14) in the same scheduling interval to mirror frequency bands within an available frequency spectrum according to the sorting of their received signal power densities, wherein assigning allocated UEs (14) in the same scheduling interval to mirror frequency bands within an available frequency spectrum according to the sorting of their received signal power densities comprises assigning pairs of the UEs (14) which are adjacent in rank order of their received signal power densities to respective mirror frequency bands, in respect to a center frequency of a subcarrier, within an available frequency spectrum wherein consecutive pairs of the allocated UEs are assigned to consecutive mirror frequency bands.

2. The method of claim 1, further comprising signaling a desired received signal power density for UEs (14) in the same scheduling interval.

3. The method of claim 2, further comprising determining the desired received signal power density on a scheduling interval basis as a function of the received signal power densities of the UEs (14) allocated to each given scheduling interval.

4. The method of claim 1, wherein allocating UEs (14) to scheduling intervals based on sorting their received signal power densities comprises ranking the UEs (14) to be scheduled according to their received signal power densities and, for a given scheduling interval, allocating UEs (14) based on their rank order to the given scheduling interval until the given scheduling interval is fully allocated.

5. The method of claim 1, further comprising, for any given scheduling interval, determining whether a difference between minimum and maximum ones of the received signal power densities for UEs (14) scheduled for that given scheduling interval exceeds an allowable difference, and, if so, signaling one or more of those UEs (14) to adjust one or more of their transmission parameters to reduce the difference.

6. The method of claim 1, wherein determining received signal power densities for a plurality of UEs (14) to be scheduled comprises, for each such UE (14), determining an achievable received signal power density as a function of a maximum transmit power of the UE (14), a path gain of the UE (14), and a signal bandwidth of the UE (14).

7. A base station (10) configured to schedule user equipments, UEs, (14) for operation in an Orthogonal Frequency Division Multiplexing, OFDM, wireless communication network, said base station (10) comprising one or more processing circuits (12) configured to:

   determine (100) received signal power densities for a plurality of UEs (14) to be scheduled;
   allocate (102) UEs (14) to scheduling intervals based on a sorting of their received signal power densities, wherein the one or more processing circuits (12) of the base station (10) are configured to allocate UEs (14) to scheduling intervals based on a sorting of their received signal power densities by sorting UEs (14) by their received signal power densities and allocating UEs (14) from consecutive sorted positions to the scheduling interval until the scheduling interval is fully allocated; and
   assign allocated UEs (14) in the same scheduling interval to mirror frequency bands within an available frequency spectrum according to the sorting of their received signal power densities, wherein the one or more processing circuits (12) of the base station (10) are configured to assign allocated UEs (14) in the same scheduling interval to mirror frequency bands within an available frequency spectrum according to the sorting of their received signal power densities by assigning pairs of the UEs (14) which are adjacent in rank order of their received signal power densities to respective mirror frequency bands, in respect to a center frequency of a subcarrier, within an available frequency spectrum wherein consecutive pairs of the allocated UEs are assigned to consecutive mirror frequency bands.

8. The base station (10) of claim 7, wherein the one or more processing circuits (12) include a received signal power density estimator (30) configured to determine the received signal power densities for the plurality of UEs (14) to be scheduled, and a scheduler (32) configured to allocate the UEs (14) to scheduling intervals based on the sorting of their received signal power densities and assign UEs (14) in the same scheduling to mirror frequency bands within the available frequency spectrum according to the sorting of their received signal power densities.

9. The base station of claim 7, wherein the one or more processing circuits (12) of the base station (10) are configured to signal a desired received signal power density for UEs (14) in the same scheduling interval.

10. The base station of claim 7, wherein the one or more processing circuits (12) of the base station (10) are configured to allocate UEs (14) to scheduling intervals based on sorting their received signal power densities by ranking the UEs (14) to be scheduled according to their received signal power densities and, for a given scheduling interval, allocating UEs (14) based on their rank order to the given scheduling interval until the given scheduling interval is fully allocated.

11. The base station (10) of claim 7, wherein the one or more processing circuits (12) of the base station (10) are configured to, for any given scheduling interval, determine whether a difference between minimum and maximum ones of the received signal power densities for UEs (14) scheduled for that given scheduling interval exceeds an allowable difference, and, if so, signal one or more of those UEs (14) to adjust one or more of their transmission parameters to reduce the difference.

**Patentansprüche**

1. Verfahren zum Terminieren von Benutzerausrüstungen, UEs, (14) in einem Orthogonal-Frequenzmultiplex- bzw. OFDM-Drahtlos-Kommunikationsnetzwerk, umfassend:

   Bestimmen (100) von Empfangssignalleistungsdichten für eine Vielzahl von UEs (14), die zu terminieren sind;
   Zuteilen (102) von UEs (14) zu Terminierungsintervallen basierend auf einer Sortierung ihrer Empfangssignalleistungsdichten, wobei Zuteilen von UEs (14) zu Terminierungsintervallen basierend auf einer Sortierung ihrer Empfangssignalleistungsdichten umfasst, UEs (14) nach ihren Empfangssignalleistungsdichten zu sortieren und UEs (14) von aufeinanderfolgenden sortierten Positionen dem Terminierungsintervall zuzuteilen, bis das Terminierungsintervall vollständig zugeteilt ist; und

Zuweisen (104) von zugeteilten UEs (14) in dem gleichen Terminierungsintervall zu Spiegelfrequenzbändern innerhalb eines verfügbaren Frequenzspektrums gemäß der Sortierung ihrer Empfangssignalleistungsdichten, wobei Zuweisen zugeteilter UEs (14) in dem gleichen Terminierungsintervall zu Spiegelfrequenzbändern innerhalb eines verfügbaren Frequenzspektrums gemäß der Sortierung ihrer Empfangssignalleistungsdichten umfasst, Paare der UEs (14), die in der Rangordnung ihrer Empfangssignalleistungsdichten aneinanderliegend sind, jeweiligen Spiegelfrequenzbändern in Bezug auf eine Mittenfrequenz eines Hilfsträgers innerhalb eines verfügbaren Frequenzspektrums zuzuweisen, wobei aufeinanderfolgende Paare der zugeteilten UEs aufeinanderfolgenden Spiegelfrequenzbändern zugewiesen werden.

2. Verfahren nach Anspruch 1, ferner umfassend, eine gewünschte Empfangssignalleistungsdichte für UEs (14) in dem gleichen Terminierungsintervall zu signalisieren.

3. Verfahren nach Anspruch 2, ferner umfassend, die gewünschte Empfangssignalleistungsdichte auf einer Terminierungsintervallbasis als eine Funktion der Empfangssignalleistungsdichten der UEs (14), die jedem gegebenen Terminierungsintervall zugeteilt wurden, zu bestimmen.

4. Verfahren nach Anspruch 1, wobei Zuteilen von UEs (14) zu Terminierungsintervallen basierend auf der Sortierung ihrer Empfangssignalleistungsdichten umfasst, die UEs (14), die zu terminieren sind, gemäß ihren Empfangssignalleistungsdichten zu ordnen und, für ein gegebenes Terminierungsintervall, UEs (14) basierend auf ihrer Rangordnung dem gegebenen Terminierungsintervall zuzuteilen, bis das gegebene Terminierungsintervall vollständig zugeteilt ist.

5. Verfahren nach Anspruch 1, ferner umfassend, für ein beliebiges gegebenes Terminierungsintervall, zu bestimmen, ob eine Differenz zwischen minimalen und maximalen einen der Empfangssignalleistungsdichten für UEs (14), die für dieses gegebene Terminierungsintervall terminiert wurden, eine zulässige Differenz übersteigt, und, falls ja, einer oder mehreren dieser UEs (14) zu signalisieren, einen oder mehrere ihrer Übertragungsparameter anzupassen, um die Differenz zu reduzieren.

6. Verfahren nach Anspruch 1, wobei Bestimmen von Empfangssignalleistungsdichten für eine Vielzahl von UEs (14), die zu terminieren sind, umfasst, für jede solche UE (14) eine erreichbare Empfangssignalleistungsdichte als eine Funktion einer maximalen Übertragungsleistung der UE (14), einer Wegverstärkung der UE (14) und einer Signalbandbreite der UE (14) zu bestimmen.

7. Basisstation (10), konfiguriert zum Terminieren von Benutzerausrüstungen, UEs, (14) für Betrieb in einem Orthogonalfrequenzmultiplex- bzw. OFDM-Drahtlos-Kommunikationsnetzwerk, wobei die Basisstation (10) eine oder mehrere Verarbeitungsschaltungen (12) umfasst, konfiguriert zum:

Bestimmen (100) von Empfangssignalleistungsdichten für eine Vielzahl von UEs (14), die zu terminieren sind;
Zuteilen (102) von UEs (14) zu Terminierungsintervallen basierend auf einer Sortierung ihrer Empfangssignalleistungsdichten, wobei die eine oder mehreren Verarbeitungsschaltungen (12) der Basisstation (10) konfiguriert sind zum Zuteilen von UEs (14) zu Terminierungsintervallen basierend auf einer Sortierung ihrer Empfangssignalleistungsdichten durch Sortieren von UEs (14) nach ihren Empfangssignalleistungsdichten und Zuteilen von UEs (14) von aufeinanderfolgenden sortierten Positionen zu dem Terminierungsintervall, bis das Terminierungsintervall vollständig zugeteilt ist; und
Zuweisen von zugeteilten UEs (14) in dem gleichen Terminierungsintervall zu Spiegelfrequenzbändern innerhalb eines verfügbaren Frequenzspektrums gemäß der Sortierung ihrer Empfangssignalleistungsdichten, wobei die eine oder mehreren Verarbeitungsschaltungen (12) der Basisstation (10) konfiguriert sind zum Zuweisen zugeteilter UEs (14) in dem gleichen Terminierungsintervall zu Spiegelfrequenzbändern innerhalb eines verfügbaren Frequenzspektrums gemäß der Sortierung ihrer Empfangssignalleistungsdichten durch Zuweisen von Paaren der UEs (14), die in der Rangordnung ihrer Empfangssignalleistungsdichten aneinanderliegend sind, zu jeweiligen Spiegelfrequenzbändern in Bezug auf eine Mittenfrequenz eines Hilfsträgers innerhalb eines verfügbaren Frequenzspektrums, wobei aufeinanderfolgende Paare der zugeteilten UEs aufeinanderfolgenden Spiegelfrequenzbändern zugewiesen werden.

8. Basisstation (10) nach Anspruch 7, wobei die eine oder mehreren Verarbeitungsschaltungen (12) eine Empfangssignalleistungsdichte-Schätzvorrichtung (30), konfiguriert zum Bestimmen der Empfangssignalleistungsdichten für die Vielzahl von UEs (14), die zu terminieren sind, und eine Terminierungsvorrichtung (32), konfiguriert zum Zuteilen der UEs (14) zu Terminierungsintervallen basierend auf der Sortierung ihrer Empfangssignalleistungsdichten und Zuweisen von UEs (14) in der gleichen Terminierung zu Spiegelfrequenzbändern innerhalb des verfügbaren Frequenzspektrums gemäß der Sortierung ihrer Empfangssignalleistungsdichten, enthalten.

9. Basisstation nach Anspruch 7, wobei die eine oder mehreren Verarbeitungsschaltungen (12) der Basisstation (10) konfiguriert sind, eine gewünschte Empfangssignalleistungsdichte für UEs (14) in dem gleichen Terminierungsintervall zu signalisieren.

10. Basisstation nach Anspruch 7, wobei die eine oder mehreren Verarbeitungsschaltungen (12) der Basisstation (10) konfiguriert sind, UEs (14) zu Terminierungsintervallen basierend auf der Sortierung ihrer Empfangssignalleistungsdichten durch Ordnen der UEs (14), die zu terminieren sind, gemäß ihrer Empfangssignalleistungsdichten zuzuteilen und, für ein gegebenes Terminierungsintervall, durch Zuteilen der UEs (14) basierend auf ihrer Rangordnung dem gegebenen Terminierungsintervall, bis das gegebene Terminierungsintervall vollständig zugeteilt ist.

11. Basisstation (10) nach Anspruch 7, wobei die eine oder mehreren Verarbeitungsschaltungen (12) der Basisstation (10) konfiguriert sind, für ein beliebiges gegebenes Terminierungsintervall zu bestimmen, ob eine Differenz zwischen minimalen und maximalen einen der Empfangssignalleistungsdichten für UEs (14), die für dieses gegebene Terminierungsintervall terminiert wurden, eine zulässige Differenz übersteigt, und, falls ja, einer oder mehreren dieser UEs (14) zu signalisieren, einen oder mehrere ihrer Übertragungsparameter anzupassen, um die Differenz zu reduzieren.

## Revendications

1. Procédé de planification d'équipements d'utilisateur, UE, (14) dans un réseau de communication sans fil à multiplexage par répartition orthogonale de la fréquence, OFDM, comprenant les étapes suivantes :

   déterminer (100) des densités de puissance de signal reçues pour une pluralité d'UE (14) à planifier ;
   allouer (102) des UE (14) à des intervalles de planification sur la base d'un tri de leurs densités de puissance de signal reçues, où l'allocation d'UE (14) à des intervalles de planification sur la base d'un tri de leurs densités de puissance de signal reçues comprend de trier des UE (14) suivant leurs densités de puissance de signal reçues et d'allouer des UE (14) à partir des positions triées consécutives à l'intervalle de planification jusqu'à ce que l'intervalle de planification soit complètement alloué ; et
   assigner (104) des UE alloués (14) dans le même intervalle de planification à des bandes de fréquences miroirs dans un spectre de fréquences disponible conformément au tri de leurs densités de puissance de signal reçues, où l'assignation d'UE alloués (14) dans le même intervalle de planification à des bandes de fréquences miroirs dans un spectre de fréquences disponible conformément au tri de leurs densités de puissance de signal reçues comprend d'assigner des paires des UE (14) qui ont des rangs adjacents dans le classement de leurs densités de puissance de signal reçues à des bandes de fréquences miroirs respectives, par rapport à une fréquence centrale d'une sous-porteuse, dans un spectre de fréquences disponible, où des paires consécutives des UE alloués sont assignées à des bandes de fréquences miroirs consécutives.

2. Procédé selon la revendication 1, comprenant en outre de signaler une densité de puissance de signal reçue souhaitée pour des UE (14) dans le même intervalle de planification.

3. Procédé selon la revendication 2, comprenant en outre de déterminer la densité de puissance de signal reçue souhaitée sur la base d'un intervalle de planification en tant que fonction des densités de puissance de signal reçues des UE (14) alloués à chaque intervalle de planification donné.

4. Procédé selon la revendication 1, dans lequel allouer des UE (14) à des intervalles de planification sur la base du tri de leurs densités de puissance de signal reçues comprend de classer les UE (14) à planifier suivant leurs densités de puissance de signal reçues et, pour un intervalle de planification donné, d'allouer des UE (14), sur la base de leur rang de classement, à l'intervalle de planification donné jusqu'à ce que l'intervalle de planification donné soit complètement alloué.

5. Procédé selon la revendication 1, comprenant en outre, pour n'importe quel intervalle de planification donné, de déterminer si une différence entre la densité minimale et la densité maximale des densités de puissance de signal reçues pour les UE (14) planifiés pour cet intervalle de planification donné dépasse une différence admissible et, si tel est le cas, signaler un ou plusieurs de ces UE (14) pour ajuster un ou plusieurs de leurs paramètres de transmission pour réduire la différence.

6. Procédé selon la revendication 1, dans lequel déterminer des densités de puissance de signal reçues pour une pluralité d'UE (14) à planifier comprend, pour chaque UE (14) concerné, de déterminer une densité de puissance de signal reçue accessible en tant que fonction d'une puissance de transmission maximale de l'UE (14), d'un gain de trajet de l'UE (14), et d'une largeur de bande de signal de l'UE (14).

7. Station de base (10) configurée pour planifier des équipements d'utilisateur, UE (14), pour un fonctionnement dans un réseau de communication sans fil à multiplexage par répartition orthogonale de la fréquence, OFDM, ladite station de base (10) comprenant un ou plusieurs circuits de traitement (12) configurés pour :

déterminer (100) des densités de puissance de signal reçues pour une pluralité d'UE (14) à planifier ;
allouer (102) des UE (14) à des intervalles de planification sur la base d'un tri de leurs densités de puissance de signal reçues, où le ou les circuits de traitement (12) de la station de base (10) sont configurés pour allouer des UE (14) à des intervalles de planification sur la base d'un tri de leurs densités de puissance de signal reçues en classant les UE (14) suivant leurs densités de puissance de signal reçues et en allouant des UE (14) à partir de positions triées consécutives à l'intervalle de planification jusqu'à ce que l'intervalle de planification soit complètement alloué ; et
assigner des UE alloués (14) dans le même intervalle de planification à des bandes de fréquences miroirs dans un spectre de fréquences disponible conformément au tri de leurs densités de puissance de signal reçues, où le ou les circuits de traitement (12) de la station de base (10) sont configurés pour assigner des UE alloués (14) dans le même intervalle de planification à des bandes de fréquences miroirs dans un spectre de fréquences disponible conformément au tri de leurs densités de puissance de signal reçues en assignant des paires des UE (14) qui ont des rangs adjacents dans le classement de leurs densités de puissance de signal reçues à des bandes de fréquences miroirs respectives, par rapport à une fréquence centrale d'une sous-porteuse, dans un spectre de fréquences disponible, où des paires consécutives des UE alloués sont assignées à des bandes de fréquences miroirs consécutives.

8. Station de base (10) selon la revendication 7, dans laquelle le ou les circuits de traitement (12) comprennent un estimateur de densité de puissance de signal reçue (30) configuré pour déterminer les densités de puissance de signal reçues pour la pluralité d'UE (14) à planifier, et un planificateur (32) configuré pour allouer les UE (14) à des intervalles de planification sur la base du tri de leurs densités de puissance de signal reçues et pour assigner des UE (14) dans la même planification à des bandes de fréquences miroirs dans le spectre de fréquences disponible conformément au tri de leurs densités de puissance de signal reçues.

9. Station de base selon la revendication 7, dans laquelle le ou les circuits de traitement (12) de la station de base (10) sont configurés pour signaler une densité de puissance de signal reçue souhaitée pour les UE (14) dans le même intervalle de planification.

10. Station de base selon la revendication 7, dans laquelle le ou les circuits de traitement (12) de la station de base (10) sont configurés pour allouer des UE (14) à des intervalles de planification sur la base du tri de leurs densités de puissance de signal reçues en classant les UE (14) à planifier suivant leurs densités de puissance de signal reçues et, pour un intervalle de planification donné, en allouant des UE (14), sur la base de leur rang de classement, à l'intervalle de planification donné jusqu'à ce que l'intervalle de planification donné soit complètement alloué.

11. Station de base (10) selon la revendication 7, dans laquelle le ou les circuits de traitement (12) de la station de base (10) sont configurés pour, pour n'importe quel intervalle de planification donné, déterminer si une différence entre la densité minimale et la densité maximale des densités de puissance de signal reçues pour les UE (14) planifiés pour cet intervalle de planification donné dépasse une différence admissible et, si tel est le cas, signaler un ou plusieurs de ces UE (14) pour ajuster un ou plusieurs de leurs paramètres de transmission pour réduire la différence.

**FIG. 1**

EP 2 020 132 B1

**FIG. 2**

EP 2 020 132 B1

*FIG. 3*

DETERMINING RECEIVED SIGNAL POWER DENSITIES FOR A PLURALITY OF UEs TO BE SCHEDULED
100

ALLOCATING UEs TO SCHEDULING INTERVALS BASED ON A SORTING OF THEIR RECEIVED SIGNAL POWER DENSITIES
102

ASSIGNING UEs IN THE SAME SCHEDULING INTERVAL TO MIRROR FREQUENCY BANDS WITHIN AN AVAILABLE FREQUENCY SPECTRUM ACCORDING TO THE SORTING OF THEIR RECEIVED SIGNAL POWER DENSITIES
104

**FIG. 4**

12

RSPD ESTIMATOR
30

SCHEDULER
32

SORTER
34

ALLOCATOR/ ASSIGNOR
36

POWER CONTROLLER
38

TRANSCEIVER RESOURCES
40

**FIG. 9**

EP 2 020 132 B1

OFDM SUBCARRIERS

CENTER FREQUENCY

MIRRORED FREQUENCIES

**FIG. 5**

SECOND PAIR

FIRST PAIR

RECEIVED SIGNAL POWER DENSITY

$UE_1$

$UE_2$

UES IN RANK ORDER

$UE_N$

$UE_{N-1}$

**FIG. 6**

SCHEDULING IN TTI 1

FIG. 7

SCHEDULING IN TTI 2

FIG. 8

EP 2 020 132 B1

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005096533 A1